# EUROPÄISCHE PATENTSCHRIFT

(11) **EP 0 316 711 B1**
(45) Veröffentlichungstag und Bekanntmachung des Hinweises auf die Patenterteilung: **03.02.1993**
(21) Anmeldenummer: 88118555.7
(22) Anmeldetag: 08.11.1988
(51) Int. Cl.: B60G 3/24

(54) **Unabhängige Radaufhängung für Kraftfahrzeuge**
Independent wheel suspension for motor vehicles
Suspension indépendante de roue de véhicules automobiles

(30) Priorität: 17.11.1987 DE 3738964
(43) Veröffentlichungstag der Anmeldung: 24.05.1989
(73) Patentinhaber: DAIMLER-BENZ AKTIENGESELLSCHAFT, 70327 Stuttgart (DE)
(72) Erfinder: Tattermusch, Peter, D-7300 Esslingen (DE); Bartel, Günter, D-7000 Stuttgart 75 (DE)

(56) Entgegenhaltungen:
- EP-A- 0 199 915
- DE-A- 1 938 851
- DE-A- 3 048 794
- FR-A- 2 174 644
- GB-A- 2 172 254
- PATENT ABSTRACTS OF JAPAN, Band 9, Nr. 98 (M-375)[1821], 27. April 1985, Seite 137 M 375; & JP-A-59 223 507 (MAZDA K.K.) 15-12-1984

## Beschreibung

Die Erfindung betrifft eine unabhängige, angetriebene Hinterradaufhängung für Kraftfahrzeuge mit einem Radträger und mit durch Einzellenker gebildeter unterer und oberer Anlenkung für diesen Radträger, bei der, bezogen auf die Vorvärtsfahrtrichtung die untere Anlenkung einen hinteren Querlenker als feder- und/oder stoßdämpfertragenden Federlenker und einen vorderen, schräg nach vorne innen verlaufenden Längslenker als Schubstrebe aufweist, die obere Anlenkung durch einen hinteren Querlenker als Sturzstrebe und einen nach vorne verlaufenden Längslenker als Zugstrebe gebildet ist und die radseitigen Anlenkpunkte dieser Streben gegenüber der Radmittenlängsebene nach innen versetzt sind und bei der eine in Fahrzeugquerrichtung verlaufende, versetzt zur Radmittenquerebene liegende Spurstange vorgesehen ist.

Radaufhängungen der vorgeschilderten Art sind aus der DE-PS 30 48 794 bekannt. Sie haben sich auch in der Praxis bewährt und zeichnen sich dadurch aus, daß sie bei kleinem Bauvolumen eine hochpräzise Radführung und zugleich gutes Komfortverhalten der Achse gewährleisten.

Es sind ferner unabhängige Vorderradaufhängungen bekannt (JP-A-59223507), bei denen in Verbindung mit einem unteren, einteiligen Dreieckslenker oder einem unteren Lenker, der durch zwei unabhängige und trapezförmig zueinander stehende Lenkerarme bzw. Lenkerstreben gebildet ist, zur Führung des Radträgers ein oberer Lenker Verwendung findet, der durch zwei voneinander unabhängige Lenkerarme gebildet ist, die sich in Draufsicht überkreuzen. Der Kreuzungspunkt der beiden oberen Lenkerarme bildet den fiktiven, ideellen oberen Fünrungspunkt der Lenkachse, der zur Fahrzeugmitte näher liegt als die tatsächlichen Anlenkpunkte der sich kreuzenden Lenkerarme am Radträger. Dies ist angestrebt, um einerseits einen Lenkrollradius verwirklichen zu können, der im Bereich von Null liegt oder negativ ist und um andererseits für den oberen und den unteren Lenker etwa gleiche Führungslängen zu verwirklichen, wie sie vorteilhaft sind, um Sturzänderungen beim Ein- und Ausfedern möglichst klein zu halten.

Für Vorderradaufhängungen ist es ferner auch aus der DE-A 19 38 851 bekannt, die oberen und unteren Lenker einer unabhängigen Radaufhängung jeweils aus zwei einzelnen, voneinander unabhängigen Lenkerarmen aufzubauen, die trapezförmig zueinander stehen. Auch dieser Aufbau hat zum Ziel, eine Achskonstuktion zu schaffen, bei der sich unterschiedliche Lenkrollradien verwirklichen lassen, so auch negative Lenkrollradien. Dies dadurch, daß die ideellen Schnittpunkte der Lenkerarme die Lage der Lenkachse bestimmen und sich bezüglich dieser ideellen Schnittpunkte relativ große konstruktive Freiheiten ergeben.

Der Erfindung liegt die Aufgabe zugrunde, Radaufhängungen der eingangs genannten, im Oberbegriff des Anspruches 1 berücksichtigten Art ohne Komforteinbuße im Hinblick auf hohe Achssteifigkeit bei kleinem Bauvolumen weiterzubilden, wie dies insbesondere für den Einsatz bei schweren Personenfahrzeugen gefordert ist.

Dies wird dadurch erreicht, daß die Zugstrebe und die Sturzstrebe der oberen Anlenkung einander im radseitigen Bereich kreuzen derart, daß der Anlenkpunkt der Sturzstrebe am Radträger vor dem entsprechenden radseitigen Anlenkpunkt der Zugstrebe liegt und beide Anlenkpunkte auf verschiedenen Seiten der Radmittenquerebene liegen und daß, bei in Draufsicht etwa parallelem Verlauf von Sturzstrebe und Federlenker sowie von Zugstrebe und Schubstrebe der von der Zugstrebe und der Sturzstrebe der oberen Anlenkung eingeschlossene und gegen die Fahrzeugmitte offene Winkel in Draufsicht innerhalb des von der Schubstrebe und dem Federlenker der unteren Anlenkung eingeschlossenen Winkels liegt, wobei in Draufsicht die radträgerseitigen Anlenkpunkte von Federlenker und Zugstrebe sowie von Schubstrebe und Sturzstrebe übereinander liegen.

Durch die gekreuzte Anordnung der beiden Streben der oberen Anlenkung ergibt sich eine Versteifung des gesamten Lenkerverbandes. Versteift wird also nicht nur die obere Anlenkung, vielmehr führt die Überkreuzung dieser Streben auch dazu, daß die Streben der unteren Anlenkung gegenüber denen der oberen Anlenkung mit ihren radträgerseitigen Anlenkpunkten bezogen auf die Radmittenquerebene überkreuzt und wechselseitig übereinander liegen. Dies erbringt bei schmaler Bauweise eine große Stabilität in der Ausrichtung des Radträgers, da Schwenkbewegungen des Radträgers bei der überkreuzten Anordnung der Streben und der überkreuzten Lage der radträgerseitigen Anlenkpunkte durch entsprechende Verspannungen entgegengewirkt wird. Die erhöhte Achssteifigkeit wirkt sich vorteilhaft im Hinblick auf eine präzise Radführung beim Anfahren und Bremsen aus. Darüberhinaus können auch Seitenkräfte gut aufgenommen werden. Alle diese Effekte werden ohne zusätzlichen Bauraumbedarf erreicht und es ließe sich, bezogen auf gleiche Achssteifigkeiten, eine erfindungsgemäß gestaltete Radaufhängung sogar schlanker bauen als bislang bekannte Systeme.

Die die obere Anlenkung bildenden, überkreuzten Streben können im Überkreuzungsbereich frei aneinander vorbeigeführt werden oder es kann auch eine der Streben, bei entsprechender Aussparung der anderen, durch die andere hindurchgeführt werden. Schließlich ist es auch möglich, die Streben im Überkreuzungsbereich elastisch zu verbinden, also beispielsweise durch eine Gummigelenkverbindung oder dergleichen, wodurch die Steifigkeit des Verbandes noch verbessert werden kann.

Die Erfindung wird im folgenden anhand eines Ausführungsbeispieles näher erläutert. Es zeigen:
- Figur 1: in vereinfachter Darstellung eine Rückansicht der erfindungsgemäßen Radaufhängung,
- Figur 2: eine Seitenansicht diese Radaufhängung, dargestellt ohne das in Figur 1 gezeigte Rad, und
- Figur 3: eine Draufsicht auf die Radaufhängung gemäß Figuren 1 und 2.

In den Figuren ist eine Radaufhängung eines Kraftfahrzeuges dargestellt. Da diese Aufhängung als Einzelradaufhängung ausgebildet ist, ist ein symmetrischer Aufbau für die rechte und die linke Fahrzeugseite gegeben und es kann deshalb die Darstellung auf lediglich eine Fahrzeugseite beschränkt bleiben.

Im Konkreten handelt es sich bei der dargestellten Radaufhängung um die Radaufhängung eines Personenkraftwagens, und zwar für dessen angetriebene Hinterachse.

Die Anbindung der Achse an den im wesentlichen nicht dargestellten Fahrzeugaufbau 1 erfolgt über einen Zwischenrahmen, der mit 2 bezeichnet ist und der seitliche Längsträger 3 aufweist, die über Querträger 4 und 5 verbunden sind.

Der Zwischenrahmen 2 ist nicht Gegenstand der Erfindung und im Rahmen der vorliegenden Schilderung nur insoweit von Interesse, als an dessen Längsträgern 3, von denen wegen des symmetrischen Aufbaues zur Fahrzeuglängsmittelebene 6 nur einer gezeigt ist, die aufbauseitige Befestigung der oberen und der unteren Anlenkung der Radaufhängung erfolgt.

Die obere Anlenkung ist im Ausführungsbeispiel durch einen, bezogen auf die Fahrtrichtung F, hinteren Querlenker 7, der als Sturzstrebe dient, sowie einen vorderen Längslenker 8 als Zugstrebe gebildet. Aufbauseitig sind die Sturzstrebe 7 und die Zugstrebe 8 am Längsträger 3 in Anlenkpunkten 9 und 10 gelenkig befestigt. Die Befestigung erfolgt dabei über die üblichen bekannten Lagerverbindungen. Radseitig sind Sturzstrebe 7 und Zugstrebe 8 am Radträger 11 in Anlenkpunkten 12 und 13 ebenfalls gelenkig angebracht.

Die untere Anlenkung besteht aus einem hinteren Querlenker 14, der Feder 16 und Stoßdämpfer 17 trägt und als Federlenker bezeichnet ist, und einem vorderen Längslenker 15, der im folgenden als Schubstrebe bezeichnet wird.

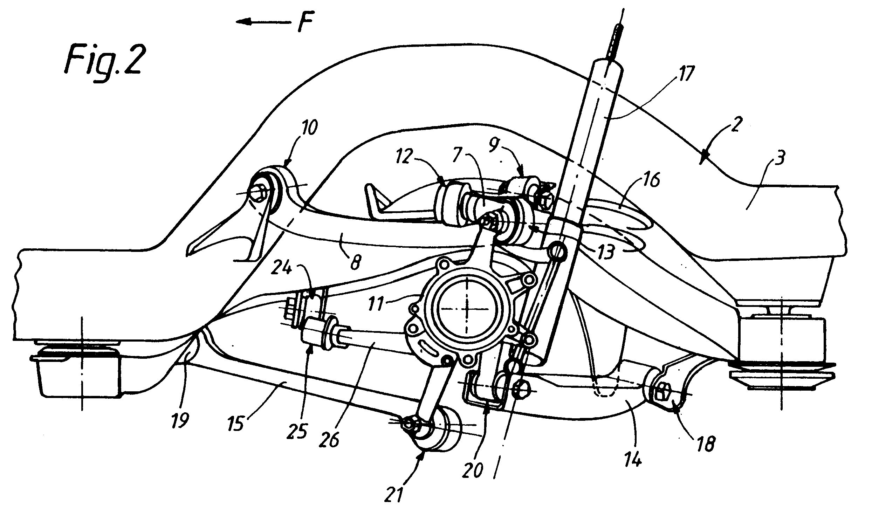

Die aufbauseitigen Anlenkpunkte von Federlenker 14 und Schubstrebe 15 sind mit 18 und 19 bezeichnet. Radseitig sind die entsprechenden Anlenkpunkte am Radträger 11 mit 20 und 21 bezeichnet. Sie sind insbesondere aus Figur 2 ersichtlich.

Neben der oberen und der unteren Anlenkung ist eine Spurstange 22 vorgesehen, die in Fahrtrichtung F vor der Radmittenquerebene 23 liegt und in Draufsicht etwa parallel zu dieser verläuft. Ihr aufbauseitiger Anlenkpunkt trägt das Bezugszeichen 24, ihr radträgerseitiger das Bezugszeichen 25. Der Anlenkpunkt 25 liegt am Ende eines nach vorne ragenden Armes 26 des Radträgers.

Im Radträger 11 ist ferner die jeweilige Antriebswelle 27 gelagert, die an das Achsgetriebe 28 angeschlossen ist, das seinerseits ebenfalls am Zwischenrahmen 2 in nicht näher beschriebener Weise gehalten ist.

Im einzelnen verläuft die Sturzstrebe 7 ausgehend vom Radträger in der Draufsicht leicht nach schräg hinten, und zwar etwa unter einem Winkel von 15° zur Radmittenquerebene 23. Die Zugstrebe 8 verläuft ausgehend vom Radträger 11 schräg nach vorne und innen, wobei sie unter einem Winkel von etwa 40° zur Radmittenlängsebene 29 ausgerichtet ist. In der Draufsicht weisen Sturzstrebe 7 und Zugstrebe 8 einen Kreuzungspunkt 30 auf.

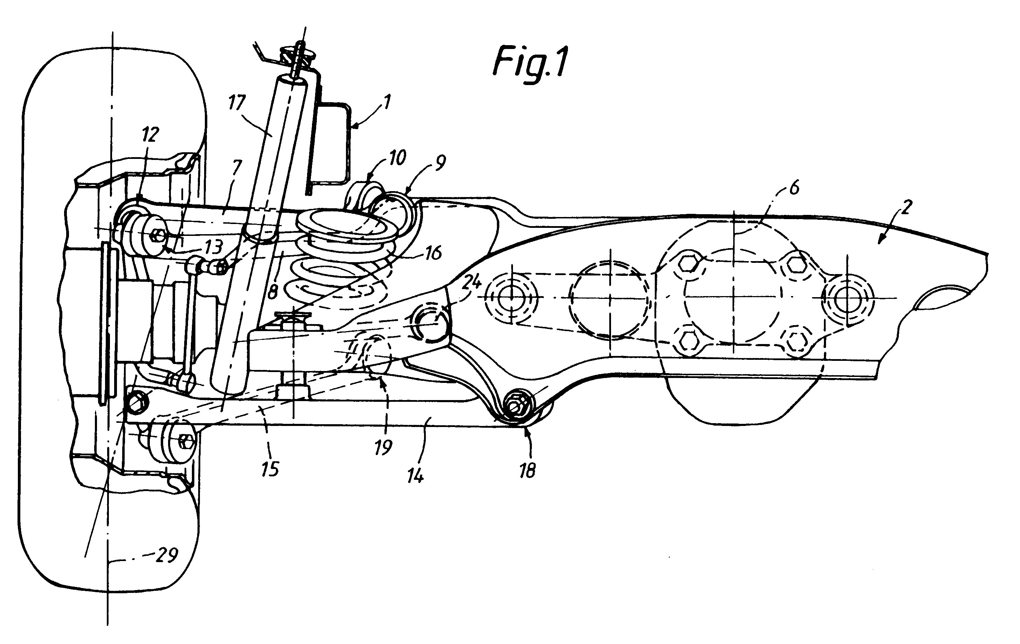

Die Zugstrebe 8 ist, wie sich aus Figur 1 ersehen läßt, unter der Sturzstrebe 7 im Ausführungsbeispiel hindurchgeführt und hierzu leicht über ihre Länge nach unten durchgewölbt. Da sowohl die Sturzstrebe 7 als auch die Zugstrebe 8 über den Kreuzungspunkt hinaus verlängert sind, der Kreuzungspunkt 30 also einen ideellen Schnittpunkt darstellt, der sich durch Verlängerung der Streben bildet, ergeben sich bezogen auf solche bekannte Ausführungsformen längere Strebenlängen. Diese längeren Strebenlängen bedingen in Verbindung mit der gezeigten gekreuzten Anordnung eine besondere Aussteifung, und zwar sowohl in bezug auf Seiten- wie auch auf Längskräfte.

Besonders deutlich wird dies in Verbindung mit der Ausgestaltung der unteren Anlenkung, die durch die Federlenker 14 und die Schubstrebe 15 gebildet ist, wobei der radträgerseitige Anlenkpunkt der als hinterer Lenker dienenden Federstrebe 14 in Draufsicht im wesentlichen unterhalb des als radträgerseitigen Anlenkpunktes 13 der Zugstrebe 8 liegt, die bezogen auf die obere Anlenkung den vorderen Lenker bildet. Ähnlich liegen auch der radträgerseitige Anlenkpunkt 12 der Sturzstrebe 7 und der radträgerseitige Anlenkpunkt 21 der Schubstrebe 15 in Draufsicht übereinander. Diese Abstützung über Kreuz nicht nur hinsichtlich der beiden Streben 7 und 8 der oberen Anlenkung, sondern auch hinsichtlich der radträgerseitigen Anlenkpunkte 12, 13, 20, 21 trägt wesentlich zur geforderten Aussteifung des Achsverbandes bei.

Der Federlenker 14 verläuft ausgehend vom Rad schräg nach hinten und innen, und zwar im wesentlichen unter einem Winkel von etwa 20° geneigt zur Radmittenquerebene 23. Die Schubstrebe 15 erstreckt sich ausgehend vom Rad schräg nach vorne und innen, und zwar unter einem Winkel von etwa 40° zur Radmittenlängsebene 29.

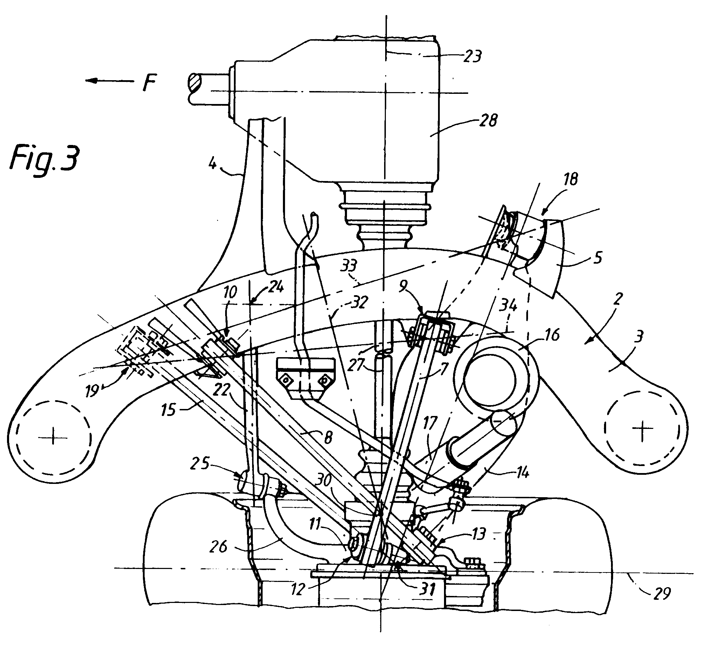

Sowohl die Lenker der oberen Anlenkung, nämlich die Sturzstrebe 7 und die Zugstrebe 8 als auch die Lenker der unteren Anlenkung, nämlich der Federlenker 14 und die Schubstrebe 15, bilden in Draufsicht die Schenkel eines sich gegen die Fahrzeugmitte hin öffnenden Winkels. Die Scheitel dieser Winkel sind für die obere Anlenkung durch den ideellen Kreuzungspunkt 30 in der Draufsicht gemäß Figur 3 und für die untere Anlenkung durch den Schnittpunkt 31 der Achsen von Federlenker 14 und Schubstrebe 15 gebildet. Die Winkelhalbierenden beider Winkel liegen im wesentlichen in einer Ebene, die in der Draufsicht mit 32 bezeichnet ist und die unter einem Winkel von etwa 15° zur Radmittenquerebene 23 liegt, wobei die Ebene 32 schräg nach vorne und innen verläuft.

Da, wie Figuren 1 und 2 zeigen, Sturzstrebe 7 und Zugstrebe 8 im wesentlichen horizontal verlaufen, da weiter auch der Federlenker 14 praktisch horizontal verläuft und da ferner die Schubstrebe 15 nur wenig nach vorne und oben geneigt ist, kann insgesamt gesehen von einem nahezu parallelen Verlauf von Zugstrebe 8 und Schubstrebe 15 sowie von Sturzstrebe 7 und Federlenker 14 gesprochen werden. In Verbindung mit der Überkreuzung von Sturzstrebe 7 und Zugstrebe 8 ergibt sich so ein sehr steifer Verband, wobei der durch die Überkreuzung entstandene ideelle obere Anlenkpunkt 30 und der ideelle Schnittpunkt 31 der unteren Anlenkung die Schwenkachse bestimmen, in bezug auf die der Radträger 11 über die Spurstange 22 abgestützt ist.

Die Spurstange liegt dabei im wesentlichen horizontal und in Fahrzeugquerrichtung verlaufend, wobei die Anlenkpunkte 24 und 25 der Spurstange in Draufsicht zu beiden Seiten von Zugstrebe 8 und Schubstrebe 15 liegen. Der aufbauseitige Anlenkpunkt 24 der Spurstange 22 liegt ferner nahezu auf der Schwenkachse der unteren Anlenkung, die durch die Verbindungslinie 33 bestimmt ist, welche durch die aufseitigen Anlenkpunkte 18, 19 des Federlenkers 14 einerseits und der Schubstrebe 15 andererseits verläuft.

Die aufbauseitigen Anlenkpunkte 9 und 10 der Sturzstrebe 7 und der Zugstrebe 8 bestimmen die Schwenkachse 34 der oberen Anlenkung. Die Verbindungslinie bzw. Schwenkachse 33 und die Schwenkachse 34 stehen winklig zueinander. Sie schließen zueinander einen Winkel von etwa 15° ein, der sich entgegen der Fahrtrichtung öffnet.

## Patentansprüche

1. Unabhängige, angetriebene Hinterradaufhängung für Kraftfahrzeuge mit einem Radträger und mit durch Einzellenker gebildeter unterer und oberer Anlenkung für diesen Radträger, bei der, bezogen auf die Vorwärtsfahrtrichtung, die untere Anlenkung einen hinteren Querlenker als Feder- und/oder Stoßdämpfer tragenden Federlenker und einen vorderen, schräg nach vorne innen verlaufenden Längslenker als Schubstrebe aufweist, die obere Anlenkung durch einen hinteren Querlenker als Sturzstrebe und einen nach vorne verlaufenden Längslenker als Zugstrebe gebildet ist und die radseitigen Anlenkpunkte dieser Streben gegenüber der Radmittenlängsebene nach innen versetzt sind und bei der eine in Fahrzeugquerrichtung verlaufende und versetzt zur Radmittenquerebene liegende Spurstange vorgesehen ist,
**dadurch gekennzeichnet,**
daß die Zugstrebe (8) und die Sturzstrebe (7) der oberen Anlenkung einander im radseitigen Bereich kreuzen, derart, daß der Anlenkpunkt (12) der Sturzstrebe (7) am Radträger (11) vor dem entsprechenden, radseitigen Anlenkpunkt (13) der Zugstrebe (8) liegt und beide Anlenkpunkte (12, 13) auf verschiedenen Seiten der Radmittenquerebene (23) liegen und daß, bei in Draufsicht etwa parallelem Verlauf von Sturzstrebe und Federlenker sowie von Zugstrebe und Schubstrebe der von der Zugstrebe (8) und der sturzstrebe (7) der oberen Anlenkung eingeschlossene und gegen die Fahrzeugmitte offene Winkel in Draufsicht innerhalb des von der Schubstrebe (15) und dem Federlenker (14) der unteren Anlenkung eingeschlossenen Winkels liegt, wobei in Draufsicht die radträgerseitigen Anlenkpunkte von Federlenker (14) und Zugstrebe (8) sowie von Schubstrebe (15) und Sturzstrebe (7) übereinander liegen.

2. Radaufhängung nach Anspruch 1,
**dadurch gekennzeichnet,**
daß die Sturzstrebe (7) der oberen Anlenkung zu einer Fahrzeugquerebene (23) unter einem Winkel von etwa 15° schräg nach hinten innen verläuft.

3. Radaufhängung nach Anspruch 1 oder 2,
**dadurch gekennzeichnet,**
daß die Zugstrebe (8) der oberen Anlenkung zu einer Fahrzeuglängsebene (29) unter einem Winkel von etwa 45° schräg nach innen vorne verläuft.

4. Radaufhängung nach einem der vorhergehenden Ansprüche,
**dadurch gekennzeichnet,**
daß die Sturzstrebe (7) der oberen Anlenkung im wesentlichen unter dem gleichen Winkel schräg nach hinten innen verläuft wie der Federlenker (14) der unteren Anlenkung.

5. Radaufhängung nach einem der vorhergehenden Ansprüche,
**dadurch gekennzeichnet,**
daß doe Zugstrebe (8) der oberen Anlenkung im wesentlichen unter dem gleichen Winkel schräg nach vorne innen verläuft wie die Schubstrebe (15) der unteren Anlenkung.

6. Radaufhängung nach einem der vorhergehenden Ansprüche,
**dadurch gekennzeichnet,**
daß die Winkelhalbierenden der von Zugstrebe (8) und Sturzstrebe (7) der oberen Anlenkung einerseits und Schubstrebe (15) und Federlenker (14) der unteren Anlenkung andererseits eingeschlossenen Winkel etwa in der gleichen Vertikalebene (32) liegen.

7. Radaufhängung nach einem der vorhergehenden Ansprüche,
**dadurch gekennzeichnet,**
daß die die Winkelhalbierenden der oberen bzw. unteren Anlenkung enthaltende Vertikalebene (32) zu einer Fahrzeugquerebene (23) unter einem Winkel von etwa 15° schräg nach vorne innen verläuft.

8. Radaufhängung nach einem der vorhergehenden Ansprüche,
**dadurch gekennzeichnet,**
daß die Spurstange (22) in einer Fahrzeugquerebene verläuft, die gegenüber der Radmittenquerebene (23) nach vorne versetzt ist und daß diese Querebene in Draufsicht benachbart zum aufbauseitigen Anlenkpunkt (10) der Zugstrebe (8) liegt.

9. Radaufhängung nach einem der vorhergehenden Ansprüche,
**dadurch gekennzeichnet,**
daß in Draufsicht die Spurstange (22) die Zugstrebe (8) und die Schubstrebe (15) kreuzt und die aufbauseitigen und die radseitigen Anlenkpunkte (24, 25) der Spurstange (22) auf verschiedenen Seiten der Zugstrebe (8) und der Schubstrebe (15) liegen.

10. Radaufhängung nach einem der vorhergehenden Ansprüche,
**dadurch gekennzeichnet,**
daß die durch die aufbauseitigen Anlenkpunkte (9, 10) der oberen Anlenkung und die aufbauseitigen Anlenkpunkte (18, 19) der unteren Anlenkpunkte jeweils bestimmten Schwenkachsen (33 bzw. 34) unter einem sich entgegen der Fahrtrichtung (F) nach hinten öffnenden Winkel von etwa 15° zueinander verlaufen.

11. Radaufhängung nach einem der vorhergehenden Ansprüche,
**dadurch gekennzeichnet,**
daß der Schnittpunkt beider Schwenkachsen (33, 34) in Draufsicht vor dem in Fahrtrichtung (F) vordersten aufbauseitigen Anlenkpunkt (10 bzw. 19) der oberen bzw. unteren Anlenkung liegt.

12. Radaufhängung nach Anspruch 10,
**dadurch gekennzeichnet,**
daß der durch die Schwenkachse (34) der oberen Anlenkung gebildete Winkelschenkel radnäher liegt als der durch die Schwenkachse (33) der unteren Anlenkung.

13. Radaufhängung nach einem der vorhergehenden Ansprüche,
**dadurch gekennzeichnet,**
daß der aufbauseitige Anlenkpunkt (24) der Spurstange (22) in Draufsicht im Bereich der Schwenkachse (33) der unteren Anlenkung liegt.

14. Radaufhängung nach einem der vorhergehenden Ansprüche,
**dadurch gekennzeichnet,**
daß der aufbauseitige Anlenkpunkt (24) der Spurstange (22) in Draufsicht gegenüber der Schwenkachse (33) der unteren Anlenkung gegen die Längsmittelebene (6) des Fahrzeuges versetzt liegt.

## Claims

1. Independent driven rear wheel suspension for motor vehicles with a wheel support and with lower and upper linking for this wheel support formed by individual links, wherein, related to the forward direction of travel, the lower linking has a rear transverse link as a spring link supporting concussion spring and/or shock absorber, and a front longitudinal link extending inwards slantingly forward as a thrust bar, the upper linking is formed by a rear transverse link as a drop bar and by a longitudinal link extending forward as a draw bar and the linking points of these bars on the wheel side are inwardly offset relative to the longitudinal plane of the wheel centre, and wherein a track rod is provided extending in the transversal direction of the vehicle and situated offset to the transversal plane of the wheel centre, characterized in that the draw bar (8) and the drop bar (7) of the upper linking cross each other in the wheel side area in such a manner that the linking point (12) of the drop bar (7) is situated on the wheel support (11) before the corresponding linking point (13) of the draw bar (8) on the wheel side, and both linking points (12, 13) lie on different sides of the wheel centre transversal plane (23) and in that, in the path substantially parallel in top view of the drop bar and spring link, as well as of draw bar and thrust bar, the angle included by the draw bar (8) and the drop bar (7) of the upper linking, and open towards the centre of the vehicle, lies in top view inside the angle included by the thrust bar (15) and the spring link (14) of the lower linking, while in top view the linking points on the wheel carrier side of the spring link (14) and the draw bar (8), as well as of the thrust bar (15) and drop bar (7) lie one on the other.

2. Wheel suspension according to claim 1, characterized in that the drop bar (1) of the upper linking to a vehicle transversal plane (23) extends at an angle of about 15° slantwise rearwardly inwardly.

3. Wheel suspension according to either claim 1 or 2, characterized in that the draw bar (8) of the upper linking to a vehicle longitudinal plane (29) extends at an angle of about 45% slantwise inwardly forward.

4. Wheel suspension according to one of the foregoing claims, characterized in that the drop bar (7) of the upper linking extends substantially at the same angle slantingly rearwardly inwardly as does the spring link (14) of the lower linking.

5. Wheel suspension according to one of the foregoing claims, characterized in that the draw bar (8) of the upper linking extends substantially at the same angle slantwise inwardly forward as does the thrust bar (15) of the lower linking.

6. Wheel suspension according to one of the foregoing claims, characterized in that the bisecting lines of the angles included by the drawbar (8) and drop bar (7) of the upper linking on the one hand, and the thrust bar (15) and spring link (14) of the lower linking on the other hand, lie substantially in the same vertical plane (32).

7. Wheel suspension according to one of the foregoing claims, characterized in that the vertical plane (32) containing the angle bisecting lines of the upper and lower linking to a vehicle transversal plane (33) lies at an angle of about 15° transversely forwardly inward.

8. Wheel suspension according to one of the foregoing claims, characterized in that the track rod (22) extends in a vehicle transversal plane which is offset forward relative to the wheel centre transversal plane (23), and in that, in top view, this transversal plane lies adjacently to the linking point (10) of the draw bar (8) on the construction side.

9. Wheel suspension according to one of the foregoing claims, characterized in that, in top view, the track rod (22) crosses the draw bar (8) and the thrust bar (15) and the linking points (24, 25) on the superstructure side and the wheel side of the track rod are situated on different sides of the draw bar (8) and of the thrust bar (15).

10. Wheel suspension according to one of the foregoing claims, characterized in that the pivoting axes (33, 34) respectively defined by the linking points (9, 10) on the superstructure side of the upper linking, and the linking points on the superstructure side (18, 19) of the lower linking extend mutually at an angle of about 15% opening contrary to the direction of travel (F) downwardly.

11. Wheel suspension according to one of the foregoing claims, characterized in that, in top view, the point of intersection of the two pivoting axes (33, 34) lies before the foremost - in the direction of travel (F) - linking point (10 or 19) of the upper and lower linking on the superstructure side.

12. Wheel suspension according to claim 10, characterized in that the side of angle formed by the pivoting axis (34) of the upper linking lies nearer to the wheel than the side of angle formed by the pivoting axis (33) of the lower linking.

13. Wheel suspension according to one of the foregoing claims, characterized in that the linking point (24) on the superstructure side of the track rod (22), seen in top view, lies in the region of the pivoting axis (33) of the lower linking.

14. Wheel suspension according to one of the foregoing claims, characterized in that the linking point (24) on the superstructure side of the track rod (22), in top view, lies opposite the pivoting axis (33) of the lower linking offset relative to the longitudinal centre plane (6) of the vehicle.

## Revendications

1. Suspension indépendante de roue arrière motrice pour véhicules automobiles, comportant un support de roue et un mécanisme inférieur d'articulation ainsi qu'un mécanisme supérieur d'articulation, constitués par des bras oscillants individuels, pour ce support de roue, suspension dans laquelle, en considérant le sens de marche avant, le mécanisme inférieur d'articulation comporte un bras transversal arrière agencé comme un bras oscillant à ressort portant un amortisseur à ressort et/ou un absorbeur de chocs ainsi qu'un bras oscillant longitudinal, orienté en oblique vers l'avant et vers l'intérieur et agencé comme une jambe de force de poussée, le mécanisme supérieur d'articulation est constitué par un bras oscillant transversal arrière agencé comme un bras oscillant de carrossage et par un bras oscillant longitudinal orienté vers l'avant et agencé comme un bras oscillant de traction, et les points d'articulation côté-roue de ces jambes de force sont décalés vers l'intérieur par rapport au plan longitudinal central de roue et en outre il est prévu une barre d'accouplement orientée dans la direction transversale du véhicule et décalée par rapport au plan transversal central de roue, suspension caractérisée en ce que la jambe de force de traction (8) et la jambe de force de carrossage (7) du mécanisme supérieur d'articulation se croisent mutuellement dans une zone latérale de la roue de telle sorte que le point d'articulation (12) de la jambe de force de carrossage (7) sur le support de roue (11) soit situé en avant du point d'articulation correspondant côté-roue (13) de la jambe de force de traction (8) et que les deux points d'articulation (12, 13) soient situés sur des côtés différents du plan transversal central de roue (13), et en ce que, dans le cas d'une orientation à peu près parallèle, en vue en plan, de la jambe de force de carrossage et du bras oscillant à ressort et également de la jambe de force de traction et de la jambe de force de poussée, l'angle formé par la jambe de force de traction (8) et la jambe de force de carrossage (7) du mécanisme supérieur d'articulation, qui est ouvert en direction du milieu du véhicule, est situé, en vue en plan, à l'intérieur de l'angle formé par la jambe de force de poussée (15) et le bras oscillant à ressort (14) du mécanisme inférieur d'articulation, et à cet égard, en vue en plan, les points d'articulation situés côté-support de roue du bras oscillant à ressort (14) et de la jambe de force de traction (8) et également de la jambe de force de poussée (15) et de la jambe de force de carrossage (7) sont situés l'un au-dessus de l'autre.

2. Suspension de roue selon la revendication 1, caractérisée en ce que la jambe de force de carrossage (7) du mécanisme supérieur d'articulation est orientée en oblique vers l'intérieur et vers l'arrière en faisant un angle d'environ 15° avec un plan transversal (23) du véhicule.

3. Suspension de roue selon la revendication 1 ou 2, caractérisée en ce que la jambe de force de traction (8) du mécanisme supérieur d'articulation est orientée en oblique vers l'intérieur et vers l'avant en faisant un angle d'environ 45° avec un plan longitudinal (29) du véhicule.

4. Suspension de roue selon une des revendications précédentes, caractérisée en ce que la jambe de force de carrossage (7) du mécanisme supérieur d'articulation est orientée en oblique vers l'arrière et vers l'intérieur en faisant sensiblement le même angle que le bras oscillant à ressort (14) du mécanisme inférieur d'articulation.

5. Suspension de roue selon une des revendications précédentes, caractérisée en ce que la jambe de force de traction (8) du mécanisme supérieur d'articulation est orientée en oblique vers l'avant et vers l'intérieur en faisant essentiellement le même angle que la jambe de force de poussée (15) du mécanisme inférieur d'articulation.

6. Suspension de roue selon une des revendications précédentes, caractérisée en ce que les bissectrices des angles formés d'une part par la jambe de force de traction (8) et par la jambe de force de carrossage (7) du mécanisme supérieur d'articulation et d'autre part par la jambe de force de poussée (15) et le bras oscillant à ressort (14) du mécanisme inférieur d'articulation sont situées à peu près dans le même plan vertical (32).

7. Suspension de roue selon une des revendications précédentes, caractérisée en ce que le plan vertical (32), contenant les bissectrices d'angles respectives du mécanisme supérieur et du mécanisme inférieur d'articulation est orienté en oblique vers l'avant et vers l'intérieur en faisant un angle d'environ 15° avec un plan transversal (23) du véhicule.

8. Suspension de roue selon une des revendications précédentes, caractérisée en ce que la barre d'accouplement (22) est disposée dans un plan transversal du véhicule, qui est décalé vers l'avant par rapport au plan transversal (23) passant par le milieu de roue et en ce que ce plan transversal est situé, en vue en plan, adjacent au point d'articulation (10), situé côté-carrosserie, de la jambe de force de traction (8).

9. Suspension de roue selon une des revendications précédentes, caractérisée en ce que, en vue en plan, la barre d'accouplement (22) croise la jambe de force de traction (8) et la jambe de force de poussée (15) et en ce que le point d'articulation (24) situé côté-carrosserie et le point d'articulation (25) situé côté-roue de la barre d'accouplement (22) sont situés sur des côtés différents de la jambe de force de traction (8) et de la jambe de force de poussée (15).

10. Suspension de roue selon une des revendications précédentes, caractérisée en ce que les axes de pivotement (33, 34) définis respectivement par les points d'articulation côté-carrosserie (9, 10) du mécanisme supérieur d'articulation et les points d'articulation côté-carrosserie (18, 19) du mécanisme inférieur d'articulation font entre eux un angle d'environ 15°, ouvert vers l'arrière à l'opposé du sens de marche (F).

11. Suspension de roue selon une des revendications précédentes, caractérisée en ce que le point d'intersection des deux axes de pivotement (33, 34) est situé, en vue en plan, en avant du point d'articulation (10 ou 19), situé côté-carrosserie le plus en avant dans le sens de marche (F), du mécanisme supérieur ou du mécanisme inférieur d'articulation.

12. Suspension de roue selon la revendication 10, caractérisée en ce que le côté d'angle formé par l'axe de pivotement (34) du mécanisme supérieur d'articulation est plus rapproché de la roue que le côté formé par l'axe de pivotement (33) du mécanisme inférieur d'articulation.

13. Suspension de roue selon une des revendications précédentes, caractérisée en ce que le point d'articulation côté-carrosserie (24) de la barre d'accouplement (22) est situé, en vue en plan, dans la zone de l'axe de pivotement (33) du mécanisme inférieur d'articulation.

14. Suspension de roue selon une des revendications précédentes, caractérisée en ce que le point d'articulation côté-carrosserie (24) de la barre d'accouplement (22) est décalé, en vue en plan, par rapport à l'axe de pivotement (33) du mécanisme inférieur d'articulation en direction du plan central longitudinal (6) du véhicule.
